## Europäisches Patentamt
## European Patent Office
## Office européen des brevets

(19)

(11) Veröffentlichungsnummer: **0 080 196**
**B1**

(12) # EUROPÄISCHE PATENTSCHRIFT

(45) Veröffentlichungstag der Patentschrift:
**14.10.87**

(51) Int. Cl.⁴: **E 21 D 21/00, E 21 D 20/02**

(21) Anmeldenummer: **82110761.2**

(22) Anmeldetag: **22.11.82**

(54) **In vorgebohrte Löcher einzusetzender Injektionsanker.**

(30) Priorität: **25.11.81 DE 3146649**

(43) Veröffentlichungstag der Anmeldung:
**01.06.83 Patentblatt 83/22**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
**DE-A-1 583 066**
**DE-A-2 412 667**
**DE-A-2 926 155**
**FR-A-1 366 950**
**FR-A-2 404 758**
**FR-A-2 472 075**
**GB-A-1 055 841**

(73) Patentinhaber: **International INTEC Company Establishment, Rheinbergerstrasse 6, FL- 9490 Vaduz (LI)**

(72) Erfinder: **Harke, Alfons, Bleregemstraat 27, B-1790 Hekelgem (BE)**

(74) Vertreter: **Peerbooms, Rudolf, Dipl.- Phys., Postfach 200 208 Dickmannstrasse 45C, D-5600 Wuppertal 2 (DE)**

LIBER, STOCKHOLM 1987

EP 0 080 196 B1

**Beschreibung**

Die Erfindung bezieht sich auf einen in vorgebohrte Löcher einzusetzenden Injektionsanker mit einem Verankerungsbolzen und mit einer im Bereich des ins Rohrloch eingeführten Bolzenendes mündenden Zuleitung die sich etwa über die Länge des Bolzens erstreckt zum Eindrücken von den Bolzen mit der Rohrlochlaibung verhindernder Injektionsmasse.

Ein derartiger Injektionsanker ist durch die FR-A-2 404 758 bekannt. Bei dem dortigen Injektionsanker ist der Verankerungsbolzen mit zwei Längsnuten versehen wobei in eine Längsnut ein Zuleitungsrohr für die Injektionsmasse eingelegt ist welches sich über die gesamte Länge des Verankerungsbolzens hinweg erstreckt und durch einen über den Verankerungsbolzen geschobenen Ring festgehalten ist. Die zweite Nut dient der Entlüftung.

Durch die CH-A-509 515 ist ein Tragbolzen zum Verankern im Gestein bekannt welcher einen am hinteren Bolzenende mündenden Längskanal und einen im vorderen Bereich des Bolzens mündenden zweiten Längskanal aufweist, von denen einer zur Entlüftung des Bohrloches dient, während der andere eine Zuflußleitung für eine Injektionsmasse darstellt. Durch die DE-A-23 15 859 ist ferner ein Verankerungsbolzen bekannt der nur einen axialen Längskanal zum Einbringen der Injektionsmasse aufweist während die Entlüftung über ein eine Leckströmung der Injektionsmasse zulassendes Überdruckventil erfolgt das an dem nahe der Bohrlochmündung anzuordnenden vorderen Bolzenlängsabschnitt angebracht ist. Durch die DE-A-24 12 667 ist es ferner bekannt einen massiven Verankerungsbolzen außen mit einem Leitrohr zu versehen durch das Injektionsmasse bis zum Verankerungsende des Bolzens injiziert werden kann. Diese bekannten Verankerungsbolzen sind jedoch alle verhältnismäßig teuer in der Herstellung.

Durch die DE-A-2 926 155 ist ferner ein Fels- oder Bodenanker bekannt, der in seiner vom Bohrloch aufzunehmenden Verankerungszone von einer flexiblen, strumpfförmigen Hülle umgeben ist in welche die Injektionsmasse über ein gesondertes Zuleitungsröhrchen eingepreßt wird wobei die flexible Hülse die Injektionsmasse einschließt und von dieser gegen die Bohrlochwandung gepreßt wird. Nach dem Einpressen werden durch die satt an der Bohrlochwandung anliegende Hülle evtl. vorhandene Hohlräume im Fels überbrückt. Auch dieser Anker ist verhältnismäßig aufwendig in der Herstellung wobei das auch dort zusätzlich vorzusehende, verhältnismäßig dünne Zuleitungsrohr angesichts der an Baustellen im allgemeinen herrschenden rauhen Arbeitsbedingungen in hohem Maße der Gefahr einer Beschädigung ausgesetzt ist.

Der Erfindung liegt die Aufgabe zugrunde einen Injektionsanker zu schaffen der auch bei stäbiler und sehr langer Ausführung noch preiswert herstellbar ist.

Zur Lösung dieser Aufgabe ist erfindungsgemäß vorgesehen, daß die Zuleitung aus einem den Bolzen eng umhüllenden Schlauch aus flexiblem Material besteht, der am aus dem Bohrloch ragenden Ende des Bolzens an eine Fülleinrichtung anschließbar ist.

Die Erfindung bietet einerseits den großen Vorteil daß nunmehr ein weitgehend beliebig gestalteter, massiver Bolzen verwendet werden kann der beispielsweise durch Schmieden stellenweise breitgeschlagen ist und so in sehr einfacher Weise mit "Hinterschneidungen" oder einer "Verzahnung" versehen werden kann, an der er von der Injektionsmasse hintergriffen wird. Ebenfalls stellt der Zuleitungsschlauch ein sehr preiswert herstellbares Teil dar, das von einem Endlosschlauch geschnitten und mittels einfacher Halteringe am Verankerungsbolzen befestigbar ist. Bei der Montage füllt die Injektionsmasse zunächst den Ringraum zwischen Zuleitungsschlauch und Verankerungsbolzen, wobei durch den Injektionsdruck der Zuleitungsschlauch an Stellen, an denen er eng an Verdickungen des Bolzens anliegt, etwas ausgeweitet wird, um einen Durchfluß ins Bohrinnere zu ermöglichen. Der Zuleitungsschlauch ist derart bemessen und ausgebildet, daß er selbst nicht gegen die Bohrlochlaibung gedrückt wird. Vielmehr tritt die Injektionsmasse am hinteren Ende des Zuleitungsschlauches aus und füllt von hinten her den Ringraum zwischen Zuleitungsschlauch und Bohrlochlaibung. Der Zuleitungsschlauch wird somit allseitig in Injektionsmasse eingebettet, und da er eine der nichtglatten Oberfläche des Verankerungsbolzens entsprechende unregelmäßige Gestalt annimmt, stellt er quasi eine Bewehrung innerhalb der Injektionsmasse dar.

In Einsatzfällen bei denen im Gestein oder Mauerwerk Spalträume oder sonstige Abgänge vorliegen, wird in Weiterbildung der Erfindung vorgesehen, daß der Zuleitungsschlauch von einem weiten oder ausweitbaren Auffangsack umschlossen ist. Bei einem solchen Verankerungsbolzen strömt die Injektionsmasse vom Zuleitungsschlauch in den Auffangsack hinein, der bis zur Anlage an die Bohrlochlaibung aufgeweitet wird, wobei der Auffangsack dann im Bereich von Hohlräumen, Abgängen oder dgl. sich etwas ausbeult, im übrigen aber diese Verlusträume abdeckt.

Der Erfindung zufolge können der Zuleitungsschlauch und der Auffangsack aus Gummi oder gummiartigem Material bestehen, jedoch werden vorzugsweise flexible Gewebe oder Gewirke vorgesehen die etwas durchlässig für die Injektionsmasse sind oder zumindest mit der Injektionsmasse tränkbar sind.

Der Erfindung zufolge kann der Bolzen Verdickungen, Einschnürungen und/oder Abbiegungen aufweisen und ist der Zuleitungsschlauch stramm über die Verdickungen des Bolzens gezogen. Dabei ist es möglich die Verdickungen mit Durchgangslöchern für die Injektionsmasse zu versehen was die Verwendung eines nicht oder nur sehr schwach ausweitbaren Zuleitungsschlauches erlaubt.

Schließlich kann der Erfindung zufolge der Injektionsanker noch mit einer die Bohrlochöffnung abschließenden Manschette versehen werden, an die der Zuleitungsschlauch und ggfs. der Auffangsack angeschlossen sind und die mit einer Einfüllöffnung und zweckmäßigerweise auch mit einer Luftauslaßöffnung versehen ist.

In Weiterbildung der Erfindung kann vorgesehen werden, daß der Auffangsack auf ganzer Länge oder in seinem vorderen Bereich aus dickwandigem, elastisch kompressiblem Material besteht, wobei aber auch alternativ oder zusätzlich der Auffangsack auf ganzer Länge oder in seinem vorderen Bereich von einem aufblähbaren Mantel aus dickwandigem, elastisch kompressiblem Material umschlossen sein kann. Hierdurch können mauerwerksseitige Spannungen zwischen inneren und äußeren Mauerwerksbereichen, wie sie beispielsweise bei Sonneneinstrahlung entstehen können, elastisch abgefangen werden. Bei auf voller Länge elastischem Auffangsack bzw. Mantel muß das Bohrloch hinterschnitten oder konisch sein, damit eine ausreichende Auszugsfestigkeit des Ankers gewährleistet bleibt.

Die Erfindung wird im folgenden anhand zweier in den Zeichnungen dargestellter Ausführungsbeispiele näher beschrieben.

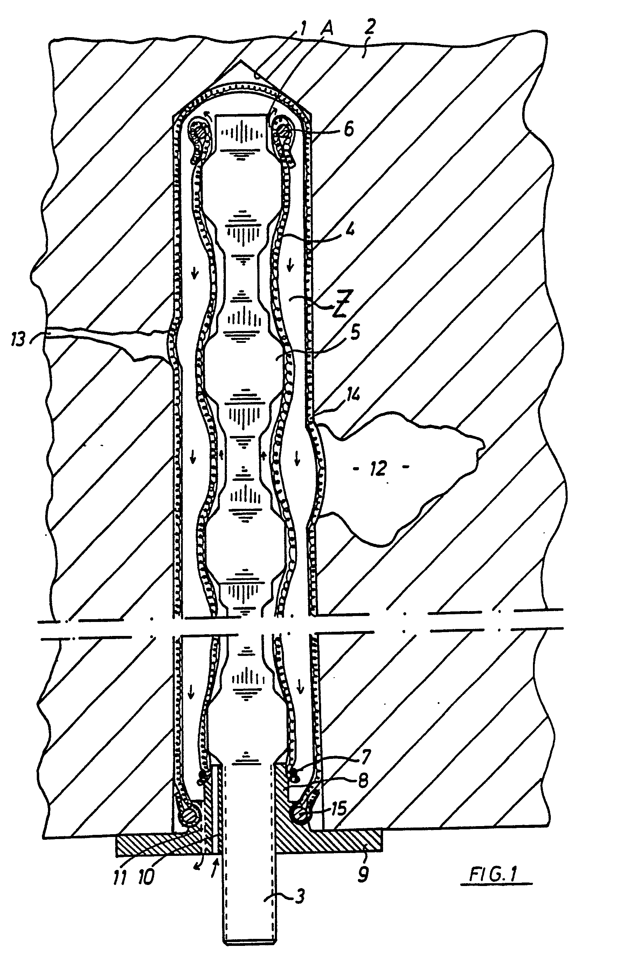

Figur 1 zeigt einen in ein vorgebohrtes Bohrloch 1 eines Gesteins 2 eingesetzten Injektionsanker, welcher aus einem massiven Bolzen 3 besteht, der am vorderen Ende mit Außengewinde versehen ist und auf seinem in das Bohrloch 1 einzuführenden Teil in regelmäßigen Abständen durch Schmiedeschläge flach und breit geschlagen ist. Über den Bolzen 3 ist ein flexibler Zuleitungsschlauch 4 gezogen der verhältnismäßig stramm an den Verbreiterungen 5 anliegt. Am innenliegenden Ende ist der Schlauch unter Einfässung eines Halteringes 6 umgeschlagen wobei der umgeschlagene Teil nach Art eines Hohlsaumes am Schlauch 4 festgenäht ist. Der Haltering 6 weist einen kleineren Durchmesser als die Verbreiterungen 5 auf so daß der Schlauch nicht mehr nach vorne vom Bolzen 3 abgezogen werden kann. Andrerseits besitzt der Haltering 6 eine solche Weite, daß der Schlauch 4 am innenliegenden Ende eine Austrittsöffnung A aufweist.

Am vorderen Ende ist der Schlauch 4 mittels eines Klemmringes 7 am Hals 8 einer das Bohrloch abschließenden Manschette 9 befestigt. Die Manschette 9 ist mit einem Einfüllkanal 10 versehen, der in den Raum zwischen Bolzen 3 und Zuleitungsschlauch 4 mündet. Ferner weist die Manschette 9 eine verhältnismäßig enge Luftauslaßöffnung 11 auf. Der Injektionsanker ist mit seinen bisher beschriebenen Teilen bereits in solchem Gestein oder Mauerwerk verwendbar in dem die Bohrlochlaibung eine geschlossene Wandungsfläche darstellt. In Fällen in denen das Rohrloch innere Hohlräume 12 oder sonstige Abgänge 13 schneidet, ist der Injektionsanker noch mit einem äußeren Auffangsack 14 überzogen der radial außerhalb der Entlüftungsöffnung 11 mittels eines Klemmringes 15 an der vorderen Manschette 9 befestigt ist. Die aus dem Zuleitungsschlauch 4 bzw. Zuleitung Z an der hinteren Öffnung A austretende Injektionsmasse wird von diesem Auffangsack 14 aufgefangen der sich unter dem Injektionsdruck bis zur Anlage an der Rohrlochlaibung ausweitet und die inneren Hohlräume 12 bzw. Abgänge 13 in der gezeigten Weise abschließt.

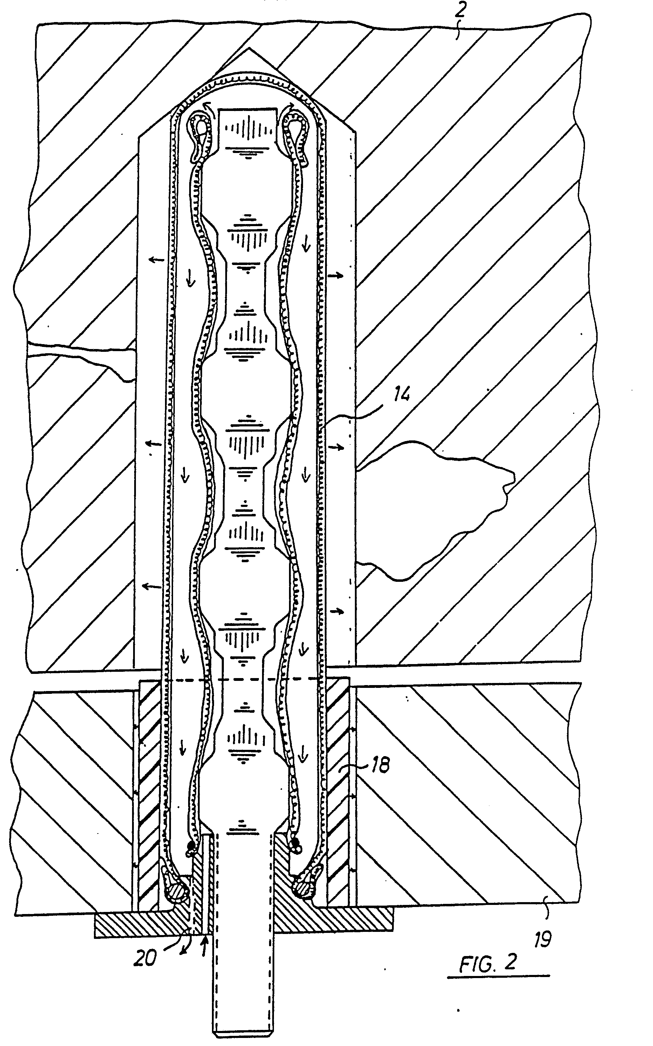

Das Ausführungsbeispiel nach Fig. 2 entspricht dem Ausführungsbeispiel nach Figur 1 mit dem Unterschied daß der Auffangsack 14 hier im vorderen Rereich von einem aufweitbaren und elastisch komprimierbaren Mantel 18 aus z. B. Gummi umschlossen ist. Der Mantel 18 liegt im Bereich einer vorgesetzten Mauerwerksschale z. · B. innerhalb einer Fassadenverkleidungsplatte 19 die z. B. thermisch bedingte Bewegungen gegenüber dem tragenden Mauerwerk 2 auszuführen trachtet. Zum Ende des Injiziervorganges wird die Entlüftungsöffnung 20 verschlossen, so daß sich ein Druck im Auffangsack 14 aufbaut, durch den der Sack 14 und der Mantel 18 an die Bohrlochwandungen angepreßt werden. Der Mantel 18 vermag aufgrund seiner inneren Elastizitat gewisse Relativbewegungen zwischen Mauerwerk 2 und Fassade 19 aufzufangen.

## Patentansprüche

1. In vorgebohrte Locher einzusetzender Injektionsanker mit einem Verankerungsbolzen (3) und mit einer im Bereich des ins Bohrloch (1) eingeführten Bolzenendes mundenden Zuleitung, die sich etwa über die Länge des Bolzens erstreckt zum Eindrücken von den Bolzen (3) mit der Rohrlochlaibung verbindender Injektionsmasse dadurch gekennzeichnet, daß die Zuleitung aus einem den Bolzen (3) eng umhüllenden Schlauch (4) aus flexiblem Material besteht, der am aus dem Bohrloch (1) ragenden Ende des Bolzens (3) an eine Fülleinrichtung anschließbar ist.

2. Injektionsanker nach Anspruch 1, dadurch gekennzeichnet daß der Bolzen (3) und der Zuleitungsschlauch (4, 16) von einem weiten oder ausweitbaren Auffangsack (14) umschlossen sind.

3. Injektionsanker nach Anspruch 2 dadurch gekennzeichnet, daß der Zuleitungsschlauch (16) und der Auffangsack (14) zumindest im Bereich der Rohrlochmündung aneinander befestigt oder einteilig gefertigt sind.

4. Injektionsanker nach Anspruch 3, dadurch

gekennzeichnet, daß der Zuleitungsschlauch (4) und/oder der Auffangsack (14) aus Gummi oder gummiartigem Material oder flexiblem Gewebe oder Gewirke bestehen.

5. Injektionsanker nach Anspruch 1, dadurch gekennzeichnet daß der Bolzen (3) Verbreiterungen (5), Einschnürungen und/oder Abbiegungen aufweist und daß der Zuleitungsschlauch (4) stramm über die Verbreiterungen des Bolzens gezogen ist.

6. Injektionsanker nach Anspruch 5, dadurch gekennzeichnet daß in den Verbreiterungen Durchgangslöcher für die Injektionsmasse vorgesehen sind.

7. Injektionsanker nach den Ansprüchen 1 oder 3, gekennzeichnet durch eine die Bohrlochöffnung abschließende Manschette (9) an der der Zuleitungsschlauch (4) und ggfs. der Auffangsack (14) angeschlossen sind und die mit einem Einfüllkanal (10) versehen ist.

8. Injektionsanker nach Anshruch 2 dadurch gekennzeichnet daß der Auffangsack (14) auf ganzer Länge oder in seinem vorderen Bereich aus dickwandigem elastisch kompressiblem Material besteht.

9. Injektionsanker nach Anspruch 2 dadurch gekennzeichnet daß der Auffangsack (14) auf ganzer Länge oder in seinem vorderen Bereich von einem aufblähbaren Mantel (18) aus dickwandigem elastisch kompressiblem Material umschlossen ist.

**Claims**

1. Injection anchor with an anchoring bolt (3) to be inserted into predrilled holes and with a feed line terminating in the area of the end of the bolt introduced into the drilled hole (1), which feed line extends approximately over the length of the bolt for forcing in of the bolts (3) with the injection mass connecting the body of the drilled hole, characterized in that the feed line consists of a hose (4) tightly enwrapping the bolt (3) and made of flexible material which may be attached to a filling arrangement at the end of the bolt (3) projecting from the bore hole (1).

2. Injection anchor as in claim 1, characterized in that the bolt (3) and the feed hose (4, 16) is enclosed by a wide or expandable catch bag (14).

3. Injection anchor as in claim 2, characterized in that the feed hose (16) and the catch bag (14) are attached to one another at least in the area of the mouth of the bore hole or are made of one part.

4. Injection anchor as in claim 3, characterized in that the feed hose (4) and/or the catch bag (14) consist of rubber or rubberlike material or of a flexible or knit fabric.

5. Injection anchor as in claim 1, characterized in that the bolt (3) has widenings (5), constrictions and/or bends and in that the feed hose (4) is pulled tightly over the widenings of the bolt.

6. Injection anchor as in claim 5, characterized in that holes of passage are provided in the widenings for the injection mass.

7. Injection anchor as in claims 1 or 3, characterized by a cuff (9) closing the bore hole opening at which the feed hose (4) and possibly the catch bag (14) are connected and which is provided with a filling-in channel (10).

8. Injection anchor as in claim 2, characterized in that on its entire length or in its forward area the catch bag (14) consists of thick-walled, elastically compressible material.

9. Injection anchor as in claim 2, characterized in that on its entire length or in its forward area the catch bag (14) is enclosed by an inflatable jacket (18) made of thick-walled, elastically compressible material.

**Revendications**

1. Cheville à injection, à introduire dans des trous perforés, munie d'un boulon d'ancrage (3) et d'un conduit d'amenée débouchant au voisinage de l'extrémité du boulon introduite dans le trou foré (1) et qui s'étend à peu près sur la longueur du boulon, pour l'introduction de masse d'injection reliant le boulon (3) à la surface intérieure du trou (1) caractérisée par le fait que le conduit d'amenée est constitué par un tuyau (4) en matière souple enveloppant étroitement le boulon (3) et qui est raccordable à un moyen de remplissage, à l'extrémité du boulon (3) qui fait saillie hors du trou foré (1).

2. Cheville à injection selon la revendication 1 caractérisée par le fait que le boulon (3) et le tuyau d'amenée (4, 16) sont enfermés dans un sac récepteur (14) ample ou expansible.

3. Cheville à injection selon la revendication 2 caractérisée par le fait que le tuyau d'amenée (16) et le sac récepteur (14) sont fixés l'un à l'autre, au moins au voisinage de l'orifice du trou, ou sont fabriqués d'une seule pièce.

4. Cheville à injectien selon la revendication 3, caractérisée par le fait que le tuyau d'amenée (4) et/ou le sac récepteur (14) sont en caoutchouc ou matière caoutchouteuse ou en tissu ou tricot souple.

5. Cheville selon la revendication 1, caractérisée par le fait que le boulon (3) présente des renflements (5), rétrécissements et/ou pliures et le tuyau d'amenée (4) passe bien tendu sur les renflements du boulon.

6. Cheville à injection selon la revendication 5, caractérisée par le fait que, dans les renflements, sont prévus des trous de passage pour la masse d'injection.

7. Cheville à injection selon les revendications 1 ou 3 caractérisée par une virole (9) fermant l'ouverture du trou foré et à laquelle sont raccordés le tuyau d'amenée (4) et éventuellement le sac récepteur (14), et qui est munie d'un canal de remplissage (10).

8. Cheville à injection selon la revendication 2,

**0 080 196**

caractérisée par le fait que le sac récepteur (14) est, sur toute sa longueur ou dans sa zone avant, en matière élastiquement compressible et à paroi épaisse.

9. Cheville à injection selon la revendication 2, caractérisée par le fait que le sac récepteur (14) est, sur toute sa longueur ou dans sa zone avant, entouré d'une enveloppe (18) gonflable en matière élastiquement compressible et à paroi épaisse.

FIG.1

FIG. 2